Europäisches Patentamt

(19) European Patent Office

Office européen des brevets

(11) Publication number: **0 262 907**
**A1**

# (12) EUROPEAN PATENT APPLICATION

(21) Application number: 87308579.9

(22) Date of filing: 28.09.87

(51) Int. Cl.⁴: **H 02 K 11/00**
H 02 K 19/36

(30) Priority: 29.09.86 GB 8623361

(43) Date of publication of application:
06.04.88 Bulletin 88/14

(84) Designated Contracting States:
AT BE CH DE ES FR GB GR IT LI LU NL SE

(71) Applicant: LUCAS INDUSTRIES public limited company
Great King Street
Birmingham, B19 2XF West Midlands (GB)

(72) Inventor: Moore, Alan Raymond
39 Hathaway Road
Sutton Coldfield West Midlands B75 5HY (GB)

(74) Representative: Shaw, Laurence
George House George Road
Edgbaston Birmingham B15 1PG (GB)

(54) Improved alternator.

㊿ An alternator includes a housing comprising a casting (1) which contains a positive conductive plate (12) carrying diodes (D) and located above the stator (2) and the internal fan (3). A negative conductive plate (6) carries diodes (D) and defines a cover for the casting (1). Ventilation holes (11) are present in plate (6) so that cooling air can reach the fan (3).

FIG.1

## Description

The invention relates to an improved alternator and in particular to an alternator of the type used in automobiles.

It has been appreciated that in use the electrical components of an alternator generate heat and this must be removed if the unit is to have a long effective life. There is a need for an alternator of a high electrical output (which aggravates the heat evolved) but there is also a need to reduce the overall volume of the unit.

It is an object of this invention to provide an alternator unit which is compact, has a high electrical output and at the same time is designed such that heat evolved is readily dissipated.

According to the invention there is provided an alternator including a stator pack , a rectifier circuit for converting A.C. to D.C, the circuit comprising a plurality of positive and negative diodes, and ventilation means characterised in that the positive diodes are mounted on a positive conductive plate adjacent the stator pack and the negative diodes are mounted on a negative conductive plate which is shaped to cover the adjacent end of the alternator.

It is a much preferred feature of the invention that the negative conductive plate which also functions as a cover is formed with ventilation holes so that cooling air can be drawn into the alternator to pass over the diodes to cool them. It is a further preferred feature of the invention that the positive plate be shaped so that air is caused to pass over opposed surfaces thereof for improved cooling.

Most preferably a lead frame is interposed between the positive plate and the stator pack so that the insulation of the lead frame tends to prevent heat generated by the stator pack from reaching the diodes.

Because the rectifier diodes are thermally isolated from the main body of the alternator, the alternator of the invention offers several advantages. The absence of a cover avoids a restriction to air flow; cooling air can flow directly onto and through the negative conductive plate. Additional cooling can also take place by air movement within the vehicle engine compartment. Because there is reduced need for a heat sink, as a result of the improved heat dissipation, the alternator can be more compact.

In order that the invention may be well understood it will now be described with reference to the accompanying diagrammatic drawings in which :

Figure 1 is a partial vertical sectional view through one end of an alternator of an invention, and

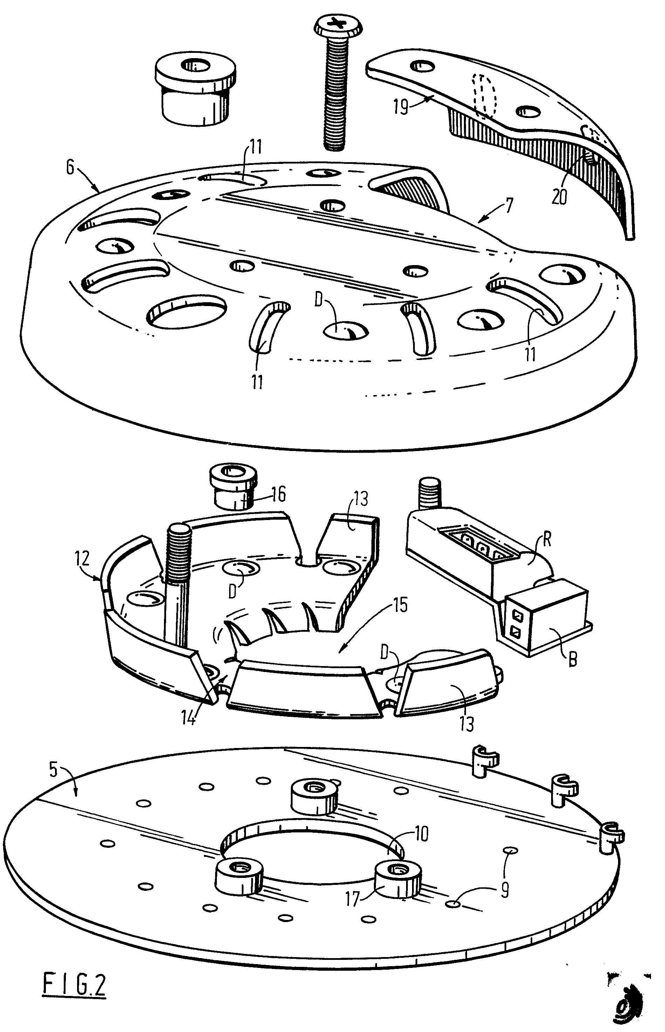

Figure 2 is an exploded perspective view of the end of Figure 1.

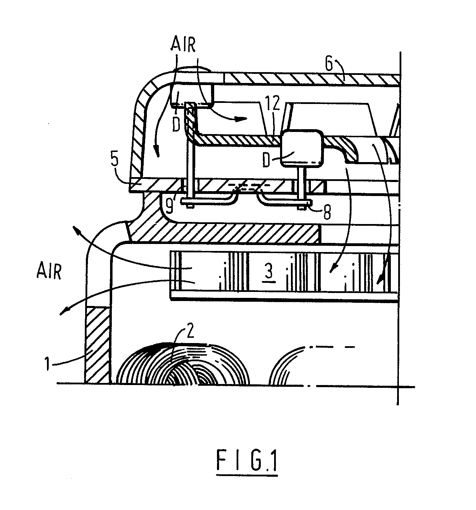

Figure 1 shows a casting 1 forming part of the housing for a stator s of an alternator. The housing incorporates an internal fan 3. One end of the alternator, the upper as shown, comprises a compartment 4 which incorporates a rectifier pack and voltage regulator. The floor of the compartment 4 comprises a lead frame 5 of electrically insulating material which is disposed adjacent the casting 1. A cuplike negative plate 6 overlies the lead frame 5 and incoporates a cut out 7. The lead frame 5 has underlying conductive strips 8 and also holes 9 for electrical connections; the lead frame also includes a central hole 10. The negative plate 6 includes elongate ventilation holes 11 and negative diodes D are fitted into and depend from the underside of the negative plate. A positive plate 12 comprises an incomplete circle having an upstanding rim 13 with cutouts 14. Diodes D are mounted on the positive plate 12. A regulator R and brush box B is dimensioned to be received in the cutout portion 15 of the positive plate. Spacer elements 16 are present between the negative plate 6 and the positive plate 12 to hold them apart and bushes 17 are present to hold the positive plate 12 relative to the lead frame 5. An output stud 18 connects the positive plate 12 through the negative plate 6 to the vehicle electrical system. A plastic regulator cover 19 incorporating vents 20 overlies the regulator and brush box.

To assemble the unit the diodes D are soldered to the conductive strips 8 of the lead frame 5 and to the condition shown in Figure 1. The stator connections are made and the regulator R and brush box B are fitted in position. The cover 19 is secured in the cutout of the negative plate 6. In use, ventilating air is caused or induced to flow through the vents 11 in the negative plate and in the lead frame 5 to the internal fan 3 of the alternator. The total unit is compact and can generate up to 100 amps and the heat evolved is dissipated. By virtue of the cutouts in the rim 13 of the positive plate 12 the air is caused to flow over the top and bottom surfaces of that plate.

## Claims

1. An alternator including a stator pack (2), a rectifier circuit for converting A.C. to D.C, the circuit comprising a plurality of positive and negative diodes (D), and ventilation means characterised in that the positive diodes (D) are mounted on a positive conductive plate (12) adjacent the stator pack (s) and the negative diodes (D) are mounted on a negative conductive plate (6) which is shaped to cover the adjacent end of the alternator.

2. An alternator according to Claim 1 characterised in that the negative conductive plate (6) is formed with ventilation holes (11).

3. An alternator according to Claim 1 or 2 characterised in that the positive plate (12) is shaped so that air is caused to pass over opposed surfaces thereof for improved cooling.

4. An alternator according to Claim 3 characterised in that the plate (12) has an upstanding rim (13) formed with cut outs (14).

5. An alternator according to any preceding Claim characterised in that a lead frame (5) is interposed between the positive plate (12) and the stator pack (2).

6. An alternator according to Claim 5 characterised in that the lead frame (5) includes a hole (10) so that cooling air may pass through to the stator pack (2).

7. An alternator according to any preceding Claim characterised in that the negative conductive plate (6) has a cut out (7) and the positive conductive plate (12) includes a cut out (15) and in that the cut outs (7 and 15) are aligned, and the regulator (R) and brush box (B) are received in the cut outs (7 and 15) and a cover (19) in the cut out (7) of the negative conductive plate (6).

8. An alternator according to Claim 7 characterised in that the cover (19) includes holes (20) for the passage of cooling air to cool the heat generated by the regulator (R).

0262907

FIG.1

15·01·88

0262907

F I G.2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-3 517 233 (MARGAIRA) <br> * Column 2, line 13 - column 3, line 64; figures 1-7 * <br> --- | 1-3 | H 02 K 11/00 <br> H 02 K 19/36 |
| X | US-A-4 189 653 (TOMOYOSHI HIRATUKA et al.) <br> * Column 3, line 11 - column 5, line 41; figures 1-9 * | 1,5,6 | |
| Y | | 3,4 | |
| Y | FR-A-2 430 126 (ROBERT BOSCH) <br> * Page 2, line 29 - page 3, line 8; page 4, lines 10-18; figures 1a,2a,3 * <br> --- | 3,4 | |
| A | FR-A-2 512 601 (ROBERT BOSCH) <br> * Page 6, line 2 - page 7, line 22; figures 1-10 * <br> --- | 3,4 | |
| A | US-A-3 329 840 (BINDER) <br> * Page 3, line 14 - page 5, line 70; figures 1-7 * <br> --- | 5,6 | TECHNICAL FIELDS SEARCHED (Int. Cl.4) |
| A | US-A-3 329 841 (BINDER) <br> * Column 2, line 55 - column 4, line 32; figures 1-6 * <br> --- | 7 | H 02 K |
| A | GB-A-1 125 767 (JOSEPH LUCAS) <br> * Page 2, lines 90-125; figure 2 * <br> ----- | 8 | |

The present search report has been drawn up for all claims

| Place of search | Date of completion of the search | Examiner |
|---|---|---|
| THE HAGUE | 04-01-1988 | TIO K.H. |